(19) Europäisches Patentamt
European Patent Office
Office européen des brevets

(11) **EP 4 575 295 A1**

(12) **EUROPEAN PATENT APPLICATION**

(43) Date of publication:
**25.06.2025 Bulletin 2025/26**

(21) Application number: **24219958.6**

(22) Date of filing: **13.12.2024**

(51) International Patent Classification (IPC):
***F16L 33/025*** *(2006.01)*

(52) Cooperative Patent Classification (CPC):
**F16L 33/025**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.12.2023 FR 2315057**

(71) Applicant: **Aliaxis Research & Technology 78990 Élancourt (FR)**

(72) Inventor: **Adelmand, Hemin 78990 Élancourt (FR)**

(74) Representative: **Sonnenberg Harrison Partners 48, rue Saint-Honoré 75001 Paris (FR)**

(54) **MECHANICAL FITTINGS**

(57) The present invention proposes a mechanical fitting for connecting pipes or for attaching a pipe. The fitting comprises a main fitting body (10, 210, 310) extending axially between a body end and an open end (11) defining an insertion space for a pipe, designed to close over a pipe, a crimping ring (30) mounted over the main fitting body for tightening the main fitting body over the pipe. The crimping ring (30) comprises a ring body (31) in a form of an open ring connected by a crimping ear (36) projecting radially outwardly from the ring body (31), the crimping ear (36) being deformable to close the crimping ring over the pipe during the crimping process. The mechanical fitting has an anti-deformation arrangement for preventing deformation of the pipe inserted therein during crimping.

A method of assembly is further proposed

[Figure 1]

Fig. 1

EP 4 575 295 A1

## Description

The present invention claims priority to the French patent application FR 23/15057, filed on 22 December 2023.

The present invention relates to the field of mechanical fittings. In particular, the present invention relates to a mechanical fitting for connecting pipes or for attaching a pipe, an assembly of a mechanical fitting and a pipe, and a method of assembly of a mechanical fitting and a pipe.

Prior art

Crimping fittings, also called press fittings, which can connect pipes by compression and deformation using one or two sleeves, are well known in the field of tubing, piping and line system installation, for example, water, gas or heating.

Press fittings are used to connect not only metal but also plastic or composite metal-plastic pipes. They are used to connect appropriately arranged sections of pipe, with their connecting pieces being inserted into the ends of the pipes to be connected, where they are then deformed or crimped or pressed. They are fastened in certain zones, e.g. using press sleeves on the pieces by using so-called system compression tools that usually have interchangeable pressing jaws.

The tube, pipe, or conduit systems are assembled in several steps: first the pipes are inserted into a fitting, and then the fitting is crimped to guarantee good mechanical strength and a leaktight installation. The compression is essentially a pressure on the fitting sleeve - also referred to as a press sleeve - which causes the deformation or shaping of the fitting to the pipe which is inserted into it. The pressure is usually applied to the fitting using a press jaw acting as a compression tool. These press jaws apply radial pressure to the fitting material in order to bring about an interaction with the surface of the pipe(s)/pipe(s) to be connected, thus achieving a reliable connection and a reliable seal.

Other fittings, such as used for example for hoses such as in garden appliances, use a threaded engagement to provide for the crimping of the pipe and rely on the fact that a part of the fitting engages with the pipe.

In both cases, the connection relies on a deformation of the pipe to be connected, in most cases using an insert inside of the tube to be connected.

For different pipe arrangements, press fittings can be designed as curved, angular or T-shaped pieces, with commonly one, two or three connection pieces being provided.

The pipe or tube can be mono material and made of thermoplastic materials including but not limited to PE, PB, PEX, PERT, PER ... or Composite (multi material tube structure) with different layers of functional materials (PEX, PERT, PVDF, Aluminium...).

It is known to use full plastic press fitting, or press fitting having a fitting body made of metal (brass, Stainless steel....), or thermoplastic (PVC, PPSU, PVDF, PPS), that can also be reinforced with fibre glass reinforcement.

With the introduction of pipes in c-PVC material, however, compression fittings relying on deformation of the material for the connection do not show good results. Indeed, c-PVC exhibits different properties and is more brittle than other materials and c-PVC is more fragile over time.

One solution that was proposed is a solvent cement connection. However, the regulation is evolving, and it will be necessary to avoid the addition of solvents.

Therefore, it is necessary to find another solution for crimping fitting, to avoid the use of solvent.

One object of the present disclosure is to propose a mechanical fitting that allows the connection of c-PVC, PVC, and PVC-U piping systems for hot and cold-water installations, hot and cold pressurized applications.

Summary of the invention

To this aim, the present invention proposes a mechanical fitting for connecting pipes or for attaching a pipe, comprising a main fitting body extending axially between a body end and an open end defining an insertion space for a pipe, designed to close over a pipe, and a crimping ring mounted over the main fitting body for tightening the main fitting body over the pipe. The crimping ring comprises a ring body in a form of an open ring connected by a crimping ear projecting radially outwardly from the ring body, the crimping ear being deformable to close the crimping ring over the pipe during the crimping process. The mechanical fitting has an anti-deformation arrangement for preventing deformation of the pipe inserted therein during crimping.

The present invention proposes a mechanical fitting designed to use friction instead of compression for ensuring a connection between the mechanical fitting and a pipe inserted therein.

This is advantageous in particular for pipe which are brittle, such pipes made of PVC or of PVC range material, also referred to as PVC based material, such as c-PVC, PVC-U, etc.

A mechanical fitting relying on friction aims at not deforming the pipe during assembly, but at creating a friction interface at the interface of the pipe and of the grip ring, capable of withstanding the pull-out force under operation. Therefore, anti-deformation arrangement for preventing deformation of the pipe inserted therein during crimping. The deformation of the pipe remains within the ovality of the pipe. Ovality of the pipe is defined as the difference between maximum and minimum diameter of the pipe over its length. For example, for a c-PVC pipe with a nominal diameter of 63 mm, the ovality is of about 0.1 to 0.15 mm depending on the condition of storage of pipe. Thus, the maximum diameter could be 63.15 mm.

The inner surface is a friction surface provided with recesses, in particular circumferential recesses extending radially inside the main fitting body and forming a friction surface over a contact length as part of the anti-deformation arrangement. These circumferential recesses help connect and maintain not only smooth but also rough surface pipes.

In other words, the pipe is maintained via its external surface without collapsing thanks to frictional force. The flow cross-section remains unchanged through the connection.

In an aspect, the fitting body has at least one axial slot, the anti-deformation arrangement comprising the at least one axial slot. The axial slot of the fitting body allows radial movement of the main fitting body. During crimping, the main fitting body may deform against the pipe during crimping and adapt to the form of the tube which may have a cross section which is not perfectly round, due to ovality of the pipe. This avoids concentration of forces on the pipe by allowing good repartition of the load on the pipe.

In an aspect, the fitting body is provided with a reinforcing element below the ring reception surface, such as a metallic open ring, in particular located between the main fitting body and the pipe when assembled. This is advantageous in particular for larger pipe diameter. The metallic ring is provided to avoid deformation and collapsing the pipe.

In an aspect, the inner surface has circumferential recesses extending radially inside the main fitting body, and the inner surface forms a friction surface over a contact length as part of the anti-deformation arrangement. This helps creating a friction interface for maintaining the pipe within the mechanical fitting. The circumferential recesses are designed to create fictional resistance against any pullout force. The are located inside the main body, they create frictional resistance outside the pipe surface.

In an aspect, an outer sleeve is provided over the compression ring, to maintain axially the crimping ring on the main fitting body.

In an aspect, the crimping ring is provided over a ring reception part of the main body extending between the open end and an outer radial projection on an outer body surface of the main body.

A ring reception part allows maintaining the crimping ring in place. This helps preassemble the crimping ring with the fitting body and maintain the crimping ring on the reception part even before crimping, thanks to radial projection and the anti-deformation arrangement.

The crimping ring can be directly mounted and fixed on the main fitting body, there is no need for additional fixation pieces.

In an aspect, the main body has an inner radial rib at its body end opposite the free end, and wherein the outer radial projection is axially spaced apart from the inner radial rib.

The inner radial rib allows a user to insert the pipe correctly without issues of over-inserting or under-inserting the pipe. Rib acts as a stopper, stopping the pipe at the right insertion distance. The pipe insertion distance is required for reliable connection.

In an aspect, a joint is provided inside a joint housing in the main fitting body located axially between the inner radial rib and the ring reception part. The joint may have an internal triangle shape for the insertion of the pipe, with an insertion surface facing the open end of the fitting, and wherein on the rear side of the joint axially opposite to the insertion surface, the joint has a rear surface having a step like shape. The internal triangle shape facilitates the insertion of the pipe inside the mechanical fitting. This shape of the rear surface of the joint allows the joint to deform around the pipe by allowing the joint moving in the extra space provided behind the step like shape rear surface.

The joint is designed to provide sealing joint during pipe insertion without any post-extra compression of joint after the pipe insertion. The main challenge is to maximize sealing, in particular to maximize operating pressure, whilst at the same time minimizing the pipe insertion force. This allows an installer inserting the pipe into the fitting easily without requiring heavy instrument for insertion.

In other words, the joint has a different cross-section profile than a O-ring, and the joint works when the pipe is inserted into the main body even without crimping. The joint is positioned outside of the pipe surface. O-ring cannot be used in the friction fitting, because the crimping process will not deform the pipe and joint. Of course, the joint can become tightened during the pipe insertion process.

In an aspect, the joint is a rubber joint. The body can be made of polymer or composite. The rubber joint allows the fitting to operate under high pressure, preventing fluid leakage under high pressure.

The present invention proposes an assembly of such a mechanical fitting and a pipe, wherein the main fitting body and the pipe have a minimum axial contact length according to the following equation:

$$L = \frac{DN}{4*stress} * P_d$$

. . .

Where Pd represents a pipe operating pressure, L is the axial contact length, and DN is the nominal diameter of the pipe.

The contact length between the pipe and the ring is the contact length required to create enough friction for maintaining the pipe with the mechanical fitting against the pull-out forces.

The present mechanical fitting is based on the friction force, and not compression force. A minimum contact surface between the pipe and the fitting is therefore needed to create enough friction to maintain the pipe connected under operation pressure. The friction force is increased with increasing the contact surface. The contact surface is a function of the diameter and length of the fitting. It is noted that the diameter of pipe is regulated by standard, there is a need to determine adequate length of a fitting for different diameters and also as a function of the operating pressure. Therefore, the above equation helps to determine the fitting length according to diameter of pipe and operating pressure.

In an aspect, after closing of the crimping ring, the crimping ring is provided over a ring reception part of the main fitting body extending between the open end and an outer radial projection on an outer body surface of the main body, and/or the outer pipe diameter is reduced by maximum 0.5 %.. In other words, a diameter reduction of 0.5 % remains on the outside surface of the pipe to create the frictional contact surface, which means that the pipe is not deformed by the crimping, there is no diminution of the cross-flow, hence the inner pipe diameter is not reduced..

The present invention proposes a method of assembling such a fitting and a pipe, comprising the steps of:

inserting the pipe into the fitting main fitting body, preferably up to the inner radial rib,

closing the ear of the crimping ring to press the main fitting body towards the pipe, wherein the pipe inner cross section remains undeformed after closing of the crimping ring with the outer pipe diameter being reduced by less than 0.5% after crimping.

In an aspect, during pipe insertion process, the joint deforms against the main fitting body on one side and against the rigid pipe on another side, in particular a rear surface of the joint having a step like shape deforms around the pipe to create water tightness.

Brief Description of the figures

Other characteristics and advantages of the invention will be more clearly evident upon reading the description of several currently preferred embodiments, provided as examples only, with reference to the attached drawings, wherein:

[Figure 1] shows a cross-sectional view of a mechanical fitting before assembly according to a first aspect of the present disclosure,

[Figure 2] shows a cross-sectional view of a mechanical fitting before assembly according to another aspect of the present disclosure,

[Figure 3] shows an element for a mechanical fitting according to present disclosure,

[Figure 4] shows a joint for a mechanical fitting a according to present disclosure,

[Figure 5] shows a joint for a mechanical fitting according to present disclosure,

[Figure 6] shows a joint for a mechanical fitting according to present disclosure,

[Figure 7] is a cross-sectional view of a mechanical fitting before assembly according to a first aspect of the present disclosure,

[Figure 8] is a mechanical fitting before and after crimping according to the present disclosure.

Detailed description

In the figures, identical parts are identified using the same reference numbers.

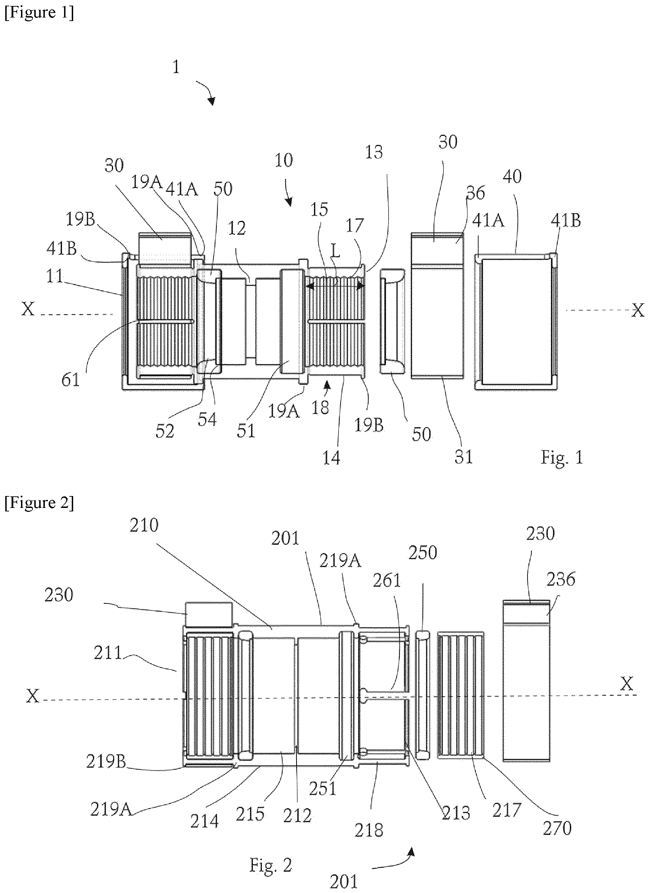

Figure 1 show a mechanical fitting 1 allowing the connection of a tube (not shown on figure 1) according to one aspect of the present invention. The tube may be for example a pipe for/in a piping system for fluid installations inside buildings.

The pipe may be for example a pipe for/in a piping system for fluid installations inside buildings. The pipe may be made of a PVC based material, such as c-PVC, PVC, and PVC-U piping systems for hot and cold-water installations, in particular for hot and cold pressurized applications.

The fitting 1 may form one side of a connector having similar or another kind of fitting on its other end or side. The fitting may also be provided at a port of a fluidic device for connecting a pipe thereto.

In the example of Figure 1, the left part of the fitting is shown in the assembled state whilst the right part shows an exploded view of the fitting. The fitting may allow the connection of two tube at both sides, but this is not limiting the invention. The fitting may form one side of a connector having similar or another kind of fitting on its other end or side. The fitting may also be provided at a port of a fluidic device for connecting a pipe thereto.

The mechanical fitting 1 comprises a main fitting body 10 for receiving the pipe.

The main fitting body 10 has an outer body surface 14 and an inner body surface 15. The main fitting body 10 defines a pipe insertion space extending in an axial direction X-X, between an open end 11, i.e. the end where the pipe is inserted, and an inner radial rib 12 extending radially internally from the inner body surface 15. The inner radial rib 12 is provided to stop the pipe inserted in the main fitting body 10.

The mechanical fitting 1 is providing a safe connection between c-PVC, PVC, and PVC-U piping system.

A crimping ring 30 is provided over the main fitting body 10, to be tightened over the main fitting body and the pipe, when the pipe is inserted into the main fitting body. The tightening of the crimping ring 30 results in the tightening of the main fitting body over the pipe to maintain the pipe in place, against pull-out force.

As can be seen, the crimping ring 30 is provided over a ring receiving part 18 of the main fitting body 10 extending between the open end 11 and an outer radial projection 19A extending radially away from the outer body surface 14.

The crimping ring 30 comprises a ring body 31 in a form of an open ring connected by a crimping ear 36 projecting radially outwardly from the ring body 31. In the example described, there is one crimping ear but it is possible to have two or more crimping ears.

As known in the art, the crimping ear 36 is deformed and the annular ends of the open ring body move towards each other during the crimping process to close the ring body 31.

However, it is important to understand that prior art crimping fittings rely on deformation of the pipe, i.e. during closing of the crimping ring, the fitting body was designed to deform the outer surface of the pipe inserted into the main fitting body, with radial recesses or grip entering into the pipe wall up to a depth corresponding to the length of the radial recesses.

This is not possible to rely on the pipe deformation with PVC based materials such as c-PVC material, PVC, PVC-U. PVC is brittle and can not withstand deformation. The pipe will only break during a crimping process of a prior art. It should be noted that focus is made in the present disclosure on c-PVC as this is the more resistant material under high pressure and temperature. The brittleness is however similar for all PVC based materials.

To address this issue of brittle material, it has to be ensured that the pipe will not undergo deformation. This is therefore a challenge for crimping fittings relaying otherwise on deformation of the pipe for the crimping process. It is important to note that the pipe should not deform under the fixation force. In fact, the mechanical fitting 1 is designed to reduce the load on the pipe, to avoid that the pipe breaks under the load.

According to the disclosure, the crimping ring 30 is designed so that the total closing of crimping ear 36 does not result in the deformation of the pipe inserted therein. However, instead of relying on compression for deforming the pipe and assembling the fitting and the pipe, the present disclosure proposes relying on friction. As such the fitting is designed to allow a certain degree of deformation of the fitting such that the resulting biasing is suitable to provide the needed friction though without being such that deformation would be induced in the tube or pipe to be attached.

With other words, instead of relying on compression for connecting the pipe, the present disclosure proposes relying on friction.

Indeed, crimping fittings of the prior art, for PE pipe, are based on deforming the pipe and reducing the outer diameter in order to maintain the pipe against pullout force generated due to internal operating pressure. For example, the inventors have measured deformation of the pipe with different existing designs. They measured a reduction of the pipe diameter from 32 to 30.6 mm, which is equivalent to 1.4 mm of pipe thickness. Thus, as an average, in the prior art, the pipe thickness is reduced by 1.4 mm, which is equivalent to 46% of pipe wall deformation or thickness reduction.

On the other hand, PVC based pipes, such as PVC pipes, c-PVC pipes or PVC-U pipes, are brittle and cannot withstand deformation. Therefore, it is not possible to rely on compression and deformation of the pipe for deforming the pipe and fixing the fitting, as was done with the mechanical fitting of the known prior art. It should be noted that focus is made in the present disclosure on c-PVC as this is the more resistant material under high pressure and temperature. The brittleness is however similar for all PVC based materials.

Similar measurements have been done for a c-PVC pipe with a nominal diameter of 63 mm and an ovality, which is the difference between maximum and minimum diameter of the pipe, of about 0.1 to 0.15 mm depending on the condition of storage of pipe. Thus, the maximum diameter could be 63.15 mm. With the mechanical fitting of the present disclosure, relying on friction crimping, the pipe diameter is reduced from 63 to 62.7 mm, which is equivalent to 0.30 mm of diameter reduction or 0.45 mm when considering the ovality and a possible maximum diameter. In turn, this is equivalent to 0.47 % of pipe deformation or diameter reduction. Instead of a traditional compression fitting where the pipe diameter is reduced at least by 10 % to create safe connection, the mechanical fitting of the present disclosure has a deformation of pipe no more than 0.5 %. This deformation is neglectable and is considered as a surface deformation, only, yet without deformation of the pipe itself.

The friction between the pipe and the main fitting body is optimized to be greater than the applied pullout force on the pipe. Minimal frictional force is required to maintain the pipe against the pull-out force due to internal pressure and external force. The pull-out force on the pipe is typically function of the operating pressure and of the diameter of the pipe.

When the crimping body 31 is closed, the inner surface 15 of the main fitting body 10 defines a friction surface to allow good grip of the pipe.

The coefficient of friction $\mu\_i$ at stationary state can be given by the following equation:

$$\mu_i = \frac{m^1 * L^1 * t^{-2}}{m^1 * L^1 * t^{-2}} = \mathrm{f}\left(m^0 * L^0 * t^0\right)$$

where **L** represent the friction contact length, hence the contact surface area between the pipe and the fitting body, **m** is mass, and hence represents also the load due to internal pressure Therefore, a minimum length of contact is required to be considered to create a frictional force to maintain pipe against pullout force, and the crimping area should be determined to ensure acceptable stress distribution on the pipe.

There is a relationship between the coefficient of friction $\mu\_i$ at stationary state, which depends on the load or the amount of stress exerted on the pipe, and the contact surface between the pipe and the fitting body.

The inventors have determined that the minimum axial contact length L at the interface between the pipe and the grip ring required to distribute the stress generated due to pullout force between the pipe and the ring acting on the pipe should fulfil the following equation:

$$L = \frac{DN}{4 * stress} * P_d$$

where Pd is the pressure, L is the axial contact length, and DN is the nominal diameter of the pipe.

For example, according to NF EN ISO 15877-5 2009-05 the design stress generated on the pipe c-PVC pipe all class Type II should be less or egal to 2.86 MPa. Under operating pressure of 25 bar, a fitting with diameter of 63 mm should resist a pullout force generated due to a pressure of 4.7 MPa. Applying the above equation, 25. 88 mm is the minimum length of the surface to not generate a load more than 2.86 MPa on the pipe. On the other hand, the minimum axial contact length is required to be considered to create frictional force to maintain pipe against pullout force.

For example, the inventors have machined a mechanical fitting with a main fitting body having an inner diameter 63 mm and a contact length of 25,88 mm between the pipe and the main fitting body. The surface roughness of the main fitting body on the pipe was 1mm, due to the radial recesses 17. The pullout force of pipe is measured = 11 837 N, and the coefficient of friction is as following:

$$\mu\_k = F\_friction/(Normal\ force) = 11837/(Normal\ force)$$

After closing of the crimping ring 30, the inner outer envelope surface of the main fitting body 10 has a body diameter equal to or greater than the outer diameter of the pipe, or at least egal to the diameter of the pipe taking account of the ovality of the pipe, with a reduction of pipe diameter of less than 0.5% after crimping.

The design of the crimping ring 30 with respect to the pipe dimension is a first anti deformation feature.

A plurality of internal circumferential recesses or radial recesses 17 extending on its inner circumference, inside the main fitting body 10 are used to provide a rough surface between the pipe and the main fitting body. A rough surface instead of a smooth surface helps maintaining the pipe and preventing sliding or translation of the pipe with respect to the mechanical fitting. The pipe should not slide with respect to the mechanical fitting, during tightening of the fitting and later on.

The internal radial recess 17 allow homogeneous distribution of the crimping load on the pipe.

To avoid local concentration of the load, the main fitting body 10 is provided also with at least one axial slot 61. The at least one axial slot 61 allows radial movement of the main fitting body. During crimping, the main fitting body 10 may deform against the pipe during crimping and adapt to the form of the tube which may have a cross section which is not perfectly round. The axial slot further prevents deformation of the pipe if the main fitting body shape does not match perfectly the pipe shape. The axial slots are another anti-deformation element.

The crimping ring 30 is mounted on the main fitting body 10, on a ring reception part 18 of the outer surface 14 of the main fitting body 10.

In the example of Figure 1, the ring reception part 18 is formed by a recess delimited by a first radial projection 19A and a second projection 19B projecting away from the outer surface of the main fitting body. The second projection 19B is located at the open end 11 of the main fitting body. The distance between the first radial projection 19A and a second radial projection 19B corresponds to the width of the crimping ring 30.

With this arrangement, the crimping ring 30 is axially fixed on the main fitting body and can be freely rotatable around the main fitting body. This is advantageous for the user as it allows the positioning of the fitting and the insertion of the tube in any position, and rotating after the crimping ring in a position in which it is easier for the user to crimp the fitting.

An outer sleeve 40 is provided to cover the crimping ring 30 and protect the crimping ring 30. The outer sleeve 40 with a first inward radial projection 41A and a second inward radial projection 41B to fix the outer sleeve 40 on the main fitting body 10. The first inward radial projection 41A and the second inward radial projection 41B can be clipped over the first radial projection 19A and a second radial projection 19B.

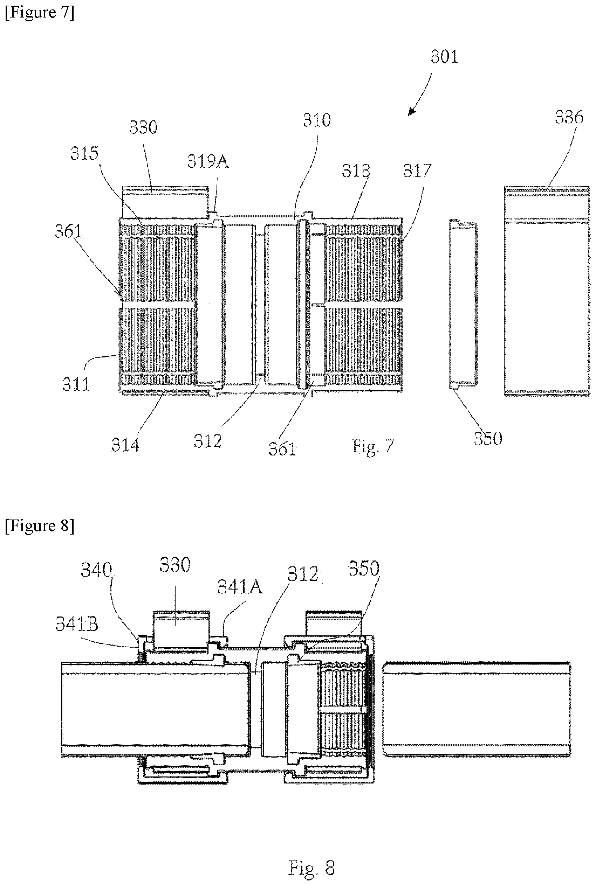

In the example of Figure 1, the crimping ring 30 is maintained in axial position in the ring reception space 18 by the first and second radial projections 19A, 19B. The outer sleeve 40 has only a cover function. As will be detailed with reference to figure 7, the outer sleeve may have the function of holding the compression ring in the ring reception space.

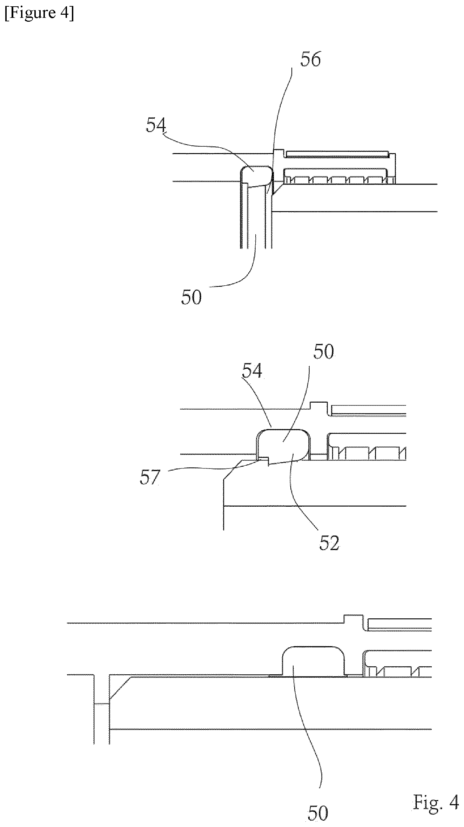

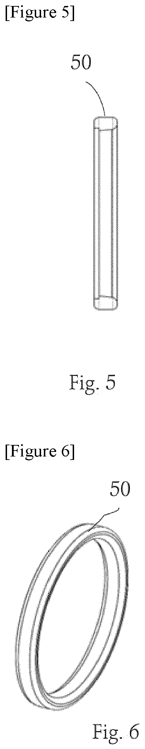

As seen on figure 1, a joint 50 is provided inside a joint housing 51 in the main body. The joint 50 is best shown on figures 4 to 6.

The joint 50 has an interface 52 with the pipe and an interface 54 with the main body 10. The joint 50 will deform against the main body in one side and against the rigid pipe on another side, thereby insuring the tightening function.

The joint 50 also takes part at the friction. A such, the joint is a rubber joint.

The joint is not a O ring joint but is designed to interact and deform around the pipe. The joint is a banana shape type joint.

The joint 50 has an internal triangle shape for the insertion of the pipe, with an insertion surface 56 facing the open end of the fitting, hence the pipe when the pipe is inserted. The insertion surface 56 facilitates the insertion of the pipe, as can be seen on Figure 4, before pipe insertion (upper part), during pipe insertion (middle part) and after pipe insertion (lower part).

On the rear side of the joint axially opposite to the insertion surface, the joint 50 has a rear surface 57 having a step like shape. This surface creates an interface between the pipe inserted in the fitting and the joint which creates the water tightness. The step like rear surface 57 gives room for the joint and thereby allows deformation of the joint around the pipe to create water tightness. The deformed joint is shown on Figure 4, after insertion.

Figure 2 shows a mechanical fitting 201 allowing the connection of a tube (not shown on figure 1) according to another aspect of the present invention. The tube may be for example a pipe for/in a piping system for fluid installations inside buildings.

The main fitting body 210 has an outer body surface 214 and an inner body surface 215. The main fitting body 210 defines a pipe insertion space extending in an axial direction X-X, between an open end 211, i.e. the end where the pipe is inserted, and an inner radial rib 212 extending radially internally from the inner body surface 215. The inner radial rib 212 is provided to stop the pipe inserted in the main fitting body 210.

A crimping ring 230 is provided over the main fitting body 210, over a ring receiving part 218 of the main fitting body 210 extending between the open end 211 and an outer radial projection 219A extending radially away from the outer body surface 214.

The crimping ring 230 comprises a ring body in a form of an open ring connected by a crimping ear 236 projecting radially outwardly from the ring body. The crimping ear 236 is deformed and the annular ends of the open ring body move towards each other during the crimping process to close the ring body.

Similar to the crimping ring 30 of the mechanical fitting of Figure 1, the crimping ring 230 is designed so that the total closing of crimping ear 236 does not result in the deformation of the pipe inserted therein. When the crimping ring 230 is closed, the inner surface 215 of the main fitting body 210 defines a friction surface to allow good grip of the pipe.

Indeed, the pipe is brittle and cannot withstand deformation. Therefore, it is not possible to rely on compression and deformation of the pipe for deforming the pipe and fixing the fitting, as was done with the mechanical fitting of the known prior art. Instead, the crimping fitting must rely on friction because of the c-PVC material. C-PVC is brittle and will only break during a crimping process of a prior art.

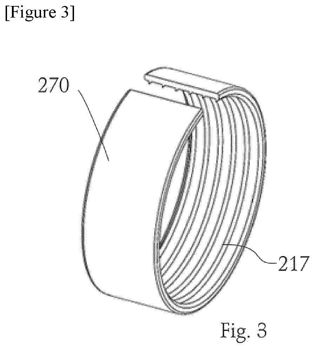

Whilst in the mechanical fitting 1 of Figure 1, a plurality of internal circumferential recesses or radial recesses 17 were provided on the inner surface of the main body to create a rough friction surface, in the mechanical fitting 201 of Figure 2, a reinforcing element 270 is inserted below the main body, and the radial recesses 217 are provided at the inner surface of said reinforcing element (see figure 3).

The reinforcing element 270 is an open ring, which can be metallic.

The friction surface is the inner surface of the reinforcing element 270, provided for maintaining the pipe and preventing sliding or translation of the pipe with respect to the mechanical fitting. The pipe should not slide with respect to the mechanical fitting, during tightening of the fitting and later on.

After closing of the crimping ring 230, the inner outer envelope surface of the main fitting body 10, with the reinforcing element 270, has a body diameter equal to or greater than the outer diameter of the pipe.. The minimum axial contact length between the reinforcing element 270 and the pipe is 25, 88 mm. When fully closed, for a tube with a diameter of 63mm, the main fitting body has an inner diameter of max 63mm.

The design of the crimping ring with the right dimension when fully closed with respect to the pipe dimension is anti-deformation feature.

To distribute the load homogeneously along the pipe and avoid local concentration of the load, the main fitting body 210 is provided with at least one axial slot 261, which allow radial movement of the main fitting body 210. The reinforcing element 270 is also an open ring. During crimping, the main fitting body 10, and the reinforcing element, may deform against the pipe during crimping and adapt to the form of the pipe which may have a cross section which is not perfectly round. The axial slot further prevents deformation of the pipe if the main fitting body shape does not match perfectly the pipe shape.

The crimping ring 230 is mounted on the main fitting body 210, on a ring reception part 218 of the outer surface 214 of the main fitting body 210. The ring reception part 218 is delimited by a first radial projection 219A and a second projection 219B projecting away from the outer surface of the main fitting body. The second projection 219B is located at the open end 211 of the main fitting body. The distance between the first radial projection 219A and a second radial projection 219B corresponds to the width of the crimping ring 230.

The crimping ring 230 is axially fixed on the main fitting body and can be freely rotatable around the main fitting body. This is advantageous for the user as it allows the positioning of the fitting and the insertion of the tube in any position, and rotating after the crimping ring in a position in which it is easier for the user to crimp the fitting.

A joint 250 is provided inside a joint housing 251 in the main body. The joint 250 is similar to the joint 50 of the mechanical fitting 1 of figure 1.

Figure 7 shows a mechanical fitting 301 allowing the connection of a tube (not shown on figure 1) according to another aspect of the present invention, and Figure 8 shows the mechanical fitting 301 with a tube according to another aspect of the present invention. The tube may be for example a pipe for/in a piping system for fluid installations inside buildings.

The main fitting body 310 has an outer body surface 314 and an inner body surface 315. The main fitting body 310 defines a pipe insertion space extending in an axial direction X-X, between an open end 311, i.e. the end where the pipe is inserted, and an inner radial rib 312 extending radially internally from the inner body surface 315. The inner radial rib 312 is provided to stop the pipe inserted in the main fitting body 310.

A crimping ring 330 is provided over the main fitting body 310, over a ring receiving part 318 of the main fitting body 310 extending between the open end 311 and an outer radial projection 319A extending radially away from the outer body surface 314.

The crimping ring 330 comprises a ring body in a form of an open ring connected by a crimping ear 36 projecting radially outwardly from the ring body. Similar to the crimping rings 30, 230 of the mechanical fittings of Figures 1 and 2, the crimping ring 330 is designed so that the total closing of crimping ear 336 does not result in the deformation of the pipe inserted therein. When the crimping ring 330 is closed, the inner surface 315 of the main fitting body 310 defines a friction surface to allow good grip of the pipe over a friction length, as for the mechanical fittings of figures 1 and 2.

After closing of the crimping ring 330, the inner outer envelope surface of the main fitting body 310, with the reinforcing element, has a body diameter equal to or greater than the outer diameter of the pipe. In turn, the crimping ring is configured so that, when fully closed, For example, for a tube with a diameter of 63 mm, the ear is designed so that, once fully closed, the main fitting body has an inner diameter reduced by maximum 2%, preferably maximum 1%, most preferably maximum 0.5%.

The design of the crimping ring with the right dimension when fully closed with respect to the pipe dimension is a first anti deformation feature.

The main fitting body 310 is provided with at least one axial slot 361, which allow radial movement of the main fitting body 310. During crimping, the main fitting body 10 may deform against the pipe during crimping and adapt to the form of the tube which may have a cross section which is not perfectly round. The axial slot further prevents deformation of the pipe if the main fitting body shape does not match perfectly the pipe shape. The axial slots are another anti-deformation element.

The crimping ring 330 is mounted on the main fitting body 310, on a ring reception part 318 of the outer surface 315 of the main fitting body 310. The ring reception part 318 is delimited by a first radial projection 319A, but, similar to the mechanical fitting of fig. 2, there is no or a little second projection located at the open end of the main fitting body to maintain the crimping ring axially in/on the ring reception part 318. In this case, an outer sleeve 340 with a first inward radial projection 341A and a second inward radial projection 341B to maintain the crimping ring 330 in place at the axial position before crimping. The second inward radial projection 341B is provided to abut against the axial outer wall of the open end 311, whilst the first inward radial projection is provided to abut against the axial outer wall of the first radial projection of the main fitting body. The outer sleeve 340 is placed over the crimping ring 330, in engagement with the main fitting body, thereby maintain the crimping ring on the main fitting body.

A joint housing 351 for hosting a joint 350 is provided axially between the inner radial projection 312 and the ring reception part 318, in particular below at an axial position adjacent to and inwardly from the outer radial projection 319A.

The rubber socket will compress the rigid pipe and maintained against pullout force, it allows a homogeneous distribution of the crimping load on the pipe, it compensate also the ovality of the rigid pipe to a void local stress. At the same time the deformed rubber will insure water tightening.

The joint 350 has an internal triangle shape.

In the examples shown in the different figures, the outer radial projection 19A, 219A, 319A is axially spaced apart from the inner radial projection 12, 212, 312. With other words, not all of the pipe length inserted into the fitting will be below the crimping ring 30 and the pipe free end abutting against the inner radial projection 12 is not provided below the crimping ring. In an aspect, not all of the pipe length inserted in the main fitting body is covered by the crimping ring, but not the entire length. This allows taking account of the fact that the end surface of the pipe may not be straight, for example the user may cut the pipe on site and the cut-out can be slanted. By leaving some space between the insertion end of the pipe an the crimping ring, it is ensure that the slanted part is not below the crimp ring which would otherwise alter the fitting performance.

This technology has significant impact to replace solvent cement connection for CPVC, PVC, and PVC-U pipe.

Once closed, the grip rings do not deform the pipe 2. The mechanical fitting, taking into account the friction coefficient and the required minimum contact surface for resisting the pull-out force, provides a well-defined contact both on the dimensions but also in order not to bring too much stress on the PVC, c-PVC, PVC-U.

The advantage of crimping mechanical fitting is easy to connect, and the network system become operational quickly.

The foregoing description of the preferred embodiments of the invention has been presented for purposes of illustration and description. It is not intended to be exhaustive or to limit the invention to the precise form disclosed, and modifications and variations are possible in light of the above teachings or may be acquired from practice of the invention. The embodiment was chosen and described in order to explain the principles of the invention and its practical application to enable one skilled in the art to utilize the invention in various embodiments as are suited to the particular use contemplated. It is intended that the scope of the invention be defined by the claims appended hereto and their equivalents.

**Claims**

1. A mechanical fitting for connecting pipes or for attaching a pipe, comprising:

   a main fitting body (10; 210; 310) extending axially between a body end and an open end (11) defining an insertion space for a pipe, the main fitting body having an inner surface (15) designed to close over a pipe, the inner surface (15) being a friction surface provided with recesses,
   a crimping ring (30) mounted over the main fitting body for tightening the main fitting body over the pipe, wherein the crimping ring (30) comprises a ring body (31) in a form of an open ring connected by a crimping ear (36) projecting radially outwardly from the ring body (31), the crimping ear (36) being deformable to close the crimping ring over the pipe during the crimping process,
   wherein the mechanical fitting has an anti-deformation arrangement for preventing deformation of the pipe inserted therein during crimping.

2. The mechanical fitting of claim 1, wherein the fitting body has at least one axial slot, the anti-deformation arrangement comprising the at least one axial slot, wherein the at least one axial slot closes without overlap during crimping process.

3. The mechanical fitting of any one of the preceding claims, wherein the main fitting body is provided with a reinforcing element below the ring reception surface, and the inner surface (15) is an inner surface of the reinforcing element, such as a metallic open ring in particular located between the main fitting body and the pipe when assembled.

4. The mechanical fitting of any one of the preceding claims, wherein the inner surface has circumferential recesses extending radially inside the main fitting body, the inner surface forming a friction surface over a contact length as part of the anti-deformation arrangement.

5. The mechanical fitting of any one of the preceding claims, wherein an outer sleeve (40) is provided over the compression ring, to maintain axially the crimping ring on the main fitting body.

6.   The mechanical fitting of any one of the preceding claims, wherein the crimping ring (30) is provided over a ring reception part (18) of the main body (10) extending between the open end (11) and an outer radial projection (19A) on an outer body surface (14) of the main body (10).

7.   The mechanical fitting of the preceding claim, wherein the main body (10; 210) has an inner radial rib (12) at its body end opposite the free end (11; 211), and wherein the outer radial projection (19A) is axially spaced apart from the inner radial rib (12).

8.   The mechanical fitting of the preceding claim, wherein a joint (50) is provided inside a joint housing (51) in the main fitting body located axially between the inner radial rib (12) and the ring reception part (18).

9.   The mechanical fitting of the preceding claim, wherein the joint (50) has an internal triangle shape for the insertion of the pipe, with an insertion surface (56) facing the open end of the fitting, and wherein on the rear side of the joint axially opposite to the insertion surface (56), the joint (50) has a rear surface (57) having a step like shape.

10.  The mechanical fitting of claim 9, wherein the joint is a rubber joint.

11.  The mechanical fitting of any one of claims 1 to 10, the body is made of polymer or composite.

12.  Assembly of a mechanical fitting according to any one of the preceding claims and a pipe, wherein the main fitting body and the pipe have a minimum axial contact length (L) according to the following equation:

$$L = \frac{DN}{4*stress} * P_d$$

Wherein Pd represents a pipe operating pressure, L is the axial contact length, and DN is a nominal diameter of the pipe.

13.  Assembly according to claim 12, wherein the crimping ring (30) is provided over a ring reception part (18) of the main fitting body (10) extending between the open end (11) and an outer radial projection (19A) on an outer body surface (14) of the main body (10), and/or wherein after closing of the crimping ring, the outer pipe diameter is reduced by maximum 0.5 %..

14.  Method of assembling a fitting according to any of claims 1 to 11 and a pipe, comprising the steps of: inserting the pipe into the main fitting body, preferably up to the inner radial rib (12), closing the ear of the crimping ring to press the main fitting body towards the pipe, wherein after closing of the crimping ring (30) the pipe diameter is reduced by less than 0.5% after crimping.

15.  Method according to the preceding claim, wherein, during pipe insertion, the joint (50) to deform against the main fitting body (10) on one side and against the rigid pipe on another side, in particular a rear surface (57) of the joint having a step like shape deforms around the pipe to create water tightness.

[Figure 1]

1

30
19A 41A 50
19B
41B
11
X
61
52 54 51 19A 18 19B 50
10
12 15 17
L
13
30
36
41A
40
41B
X
31
14

Fig. 1

[Figure 2]

210
230
211
X
219B
219A
214 215 212
201
219A
201
250
230
236
261
251
218
213 217
270
X

Fig. 2

[Figure 3]

Fig. 3

[Figure 4]

56

54

50

54

50

57

52

50

50

Fig. 4

[Figure 5]

50

Fig. 5

[Figure 6]

50

Fig. 6

[Figure 7]

Fig. 7

[Figure 8]

Fig. 8

Europäisches
Patentamt
European
Patent Office
Office européen
des brevets

**EUROPEAN SEARCH REPORT**

Application Number

EP 24 21 9958

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 0 098 237 B1 (MANNESMANN AG [DE]) 5 November 1986 (1986-11-05) * column 2, line 1 - line 24; figures 1,4 * | 1,2 | INV. F16L33/025 |
| Y A | EP 2 757 299 B1 (GEBERIT INT AG [CH]) 25 August 2021 (2021-08-25) * paragraph [0018] - paragraph [0037]; figure 3 * | 1-3,5-7, 13,14 4,8-12, 15 | |
| Y A | WO 2015/197248 A1 (GEBERIT INT AG [CH]) 30 December 2015 (2015-12-30) * page 10, line 4 - page 20, line 12; figures 2,3,5 * | 1-4,6-15 5 | |
| Y | US 2005/161941 A1 (POLL STEVEN A [US] ET AL) 28 July 2005 (2005-07-28) * paragraph [0007] - paragraph [0033]; figures 3-5 * | 1-15 | |

TECHNICAL FIELDS
SEARCHED (IPC)

F16L

The present search report has been drawn up for all claims

| Place of search | Date of completion of the search | Examiner |
|---|---|---|
| Munich | 16 April 2025 | Möbius, Henning |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 21 9958

This annex lists the patent family members relating to the patent documents cited in  the above-mentioned European search report.
The members are as contained in the European Patent Office EDP file on
The European Patent Office is in no way liable for these particulars which are merely given for the purpose of information.

16-04-2025

| Patent document cited in search report | | Publication date | Patent family member(s) | | Publication date |
|---|---|---|---|---|---|
| EP 0098237 | B1 | 05-11-1986 | DE | 3224602 A1 | 05-01-1984 |
| | | | EP | 0098237 A1 | 11-01-1984 |
| | | | JP | S59501224 A | 12-07-1984 |
| | | | WO | 8400203 A1 | 19-01-1984 |
| EP 2757299 | B1 | 25-08-2021 | EP | 2497989 A1 | 12-09-2012 |
| | | | EP | 2757299 A1 | 23-07-2014 |
| | | | RU | 2012107681 A | 10-09-2013 |
| WO 2015197248 | A1 | 30-12-2015 | DK | 3161364 T3 | 10-12-2018 |
| | | | EP | 3161363 A1 | 03-05-2017 |
| | | | EP | 3161364 A1 | 03-05-2017 |
| | | | ES | 2690575 T3 | 21-11-2018 |
| | | | WO | 2015197246 A1 | 30-12-2015 |
| | | | WO | 2015197248 A1 | 30-12-2015 |
| US 2005161941 | A1 | 28-07-2005 | AT | E479867 T1 | 15-09-2010 |
| | | | CN | 1910395 A | 07-02-2007 |
| | | | US | 2005161939 A1 | 28-07-2005 |
| | | | US | 2005161941 A1 | 28-07-2005 |

EPO FORM P0459

For more details about this annex : see Official Journal of the European Patent Office, No. 12/82

**REFERENCES CITED IN THE DESCRIPTION**

**Patent documents cited in the description**

- FR 2315057